# EUROPEAN PATENT SPECIFICATION

(11) **EP 4 408 912 B1**
(45) Date of publication and mention of the grant of the patent: **15.10.2025**
(21) Application number: 22797218.9
(22) Date of filing: 29.09.2022
(51) Int. Cl.: C08J 9/12

(54) **RECYCLABLE POLYMER FOAMS**
RECYCELBARE POLYMERSCHAUMSTOFFE
MOUSSES POLYMÈRES RECYCLABLES

(30) Priority: 30.09.2021 US 202163250256 P
(43) Date of publication of application: 07.08.2024
(73) Proprietor: Dow Global Technologies LLC, Midland, MI 48674 (US); Dow Silicones Corporation, Midland, Michigan 48686 (US)
(72) Inventor: WENG, Xilun, Shanghai 201203 (CN); CHEN, Hongyu, Zhangjiang 201203 (CN); YAN, Jinliang, Shanghai 201203 (CN); OUYANG, Wuye, Shanghai 201203 (CN); LYU, Bo, Shanghai 201203 (CN); ZHANG, Kainan, Shanghai 201203 (CN); HE, Chao, Shanghai 201203 (CN)
(74) Representative: Boult Wade Tennant LLP
(86) International application number: PCT/US2022/077236
(87) International publication number: WO 2023/056339

(56) References cited:
- WO-A1-2021/076090
- US-A1- 2010 292 403

## Description

### CROSS-REFERENCE To RELATED APPLICATIONS

This application claims the benefit of U.S. Provisional Application Serial No. 63/250,256 filed September 30, 2021.

### TECHNICAL FIELD

Embodiments of the present disclosure generally relate to polymers, and more specifically, to polymer foams.

### BACKGROUND

Polymer foams are widely used in various applications, for example, as materials in footwear midsoles. In midsole applications, the foam must have high rebound resilience, minimal shrinkage on heating, low density and high tear strength. To achieve these properties, a high melt strength is required. Without a high melt strength, the cells of the foam may rupture during physical foaming, which takes place near the melting point of the polymer. Traditionally, this strength is achieved through crosslinking; however, crosslinked materials may have thermal stability issues during the foaming process.

Accordingly, there is a need for improved materials that maintain melting strength and thermal stability during and after the physical foaming process.
WO 2021/076090 A1 relates to compositions and methods of making thermoset foams for shoe soles. US 2010/292403 A1 relates to compositions comprising the following: a) at least one olefin multi-block interpolymer; b) at least one functionalized olefin-based polymer; and c) at least one thermoplastic polyurethane.

Present materials provide thermally reversible crosslinked polymer foams.

### SUMMARY

Embodiments of the present disclosure address this need by providing thermoreversible crosslinked polymer foams. Thermally reversible crosslinking means that the crosslinks dissociate at high temperature and re-associate at room temperature. Thus, it can provide high melt strength, easy processability, good mechanical properties, and uniform foam structure, relative to irreversibly crosslinked polymer foams.

In a first aspect the invention provides a foam comprising the crosslinked reaction product of a maleic anhydride grafted olefin block copolymer (MAH-g-OBC) and a secondary alcohol. The foam has a density less than or equal to 0.2 g/cc.

In a further aspect the invention provides a foaming process: physically foaming a thermoreversible crosslinkable composition to form the foam as described herein. The thermoreversible crosslinkable composition comprises the MAH-g-OBC, and the secondary alcohol.

Additional features and advantages of the embodiments will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing and the following description describes various embodiments and are intended to provide an overview or framework for understanding the nature and character of the claimed subject matter. The accompanying figures are included to provide a further understanding of the various embodiments, and are incorporated into and constitute a part of this specification.

### BRIEF DESCRIPTION OF THE DRAWINGS

The following detailed description of specific embodiments of the present disclosure can be best understood when read in conjunction with the following drawings, where like structure is indicated with like reference numerals and in which:
Fig. 1 depicts the FTIR spectra of inventive example 1 at various temperatures.
Fig. 2 depicts the complex viscosity of inventive example 1 at various temperatures.

### DETAILED DESCRIPTION

The present disclosure includes polymer foams and methods of making polymer foams. The polymer foams may be derived from thermoreversible crosslinkable polymer compositions, such as MAH-g-OBC and a secondary alcohol. These polymer foams may have superior melt strength, shrinkage, density, and processability, relative to conventional foams.

### Definitions

As used herein, the terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

As used herein, the term "polymer" refers to a polymeric compound prepared by polymerizing monomers, whether of the same or a different type. The term polymer thus embraces the term homopolymer (employed to refer to polymers prepared from only one type of monomer, with the understanding that trace amounts of impurities can be incorporated into the polymer structure), and the term copolymer or interpolymer. Trace amounts of impurities (for example, catalyst residues) may be incorporated into and/or within the polymer. A polymer may be a single polymer or a polymer blend.

"Polyethylene" or "ethylene-based polymer" shall mean polymers comprising greater than 50% by mole of units derived from ethylene monomer. This includes ethylene-based homopolymers or copolymers (meaning units derived from two or more comonomers). Common forms of ethylene-based polymers known in the art include, but are not limited to, Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE).

As used herein, the term "LDPE" or "low density polyethylene" refers to an ethylene homopolymer prepared using a free radical, high-pressure (≥ 100 MPa (for example, 100-400 MPa)) polymerization. LDPE resins typically have a density in the range of 0.916 to 0.935 g/cm³.

The term "LLDPE" or "linear low density polyethylene includes resin made using Ziegler-Natta catalyst systems as well as resin made using single-site catalysts, including, but not limited to, bis-metallocene catalysts (sometimes referred to as "m-LLDPE"), phosphinimine, and constrained geometry catalysts, and resins made using post-metallocene, molecular catalysts, including, but not limited to, bis(biphenylphenoxy) catalysts (also referred to as polyvalent aryloxyether catalysts). LLDPE includes linear, substantially linear, or heterogeneous ethylene-based copolymers or homopolymers. LLDPEs contain less long chain branching than LDPEs and include the substantially linear ethylene polymers, which are further defined in U.S. Patent No. 5,272,236, U.S. Patent No. 5,278,272, U.S. Patent No. 5,582,923 and U.S. Patent No. 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and blends thereof (such as those disclosed in U.S. Patent No. 3,914,342 and U.S. Patent No. 5,854,045). The LLDPE resins can be made via gas-phase, solution-phase, or slurry polymerization or any combination thereof, using any type of reactor or reactor configuration known in the art.

As used herein, the term "PP" refers to polypropylene. Polypropylene resins may comprise at least 50 wt.% of propylene monomers. For example, polypropylene resins may comprise at least 60 wt.%, at least 70 wt.%, at least 80 wt.%, at least 90 wt.%, at least 95 wt.%, at least 99 wt.%, or even 100 wt.% of propylene monomers.

As used herein, the abbreviation "EVA" refers to ethylene-vinyl acetate. Ethylene-vinyl acetate resins may comprise at least 50 wt.% ethylene monomer. For example, ethylene-vinyl acetate resins may comprise at least 60 wt.%, at least 70 wt.% wt.% wt.% wt.% wt.% wt.%ethylene monomer. Conversely, ethylene-vinyl acetate resins may comprise at least 5 wt.%, at least 10 wt.%, at least 15 wt.%, at least 20 wt.%, or at least 25 wt.% vinyl acetate monomer. wt.% wt.%

As used herein, the abbreviation "POE" refers to polyolefin elastomers wherein the POE compounds are homopolymers or copolymers comprising simple olefins of the general formula CₙH₂ₙ, wherein n is 2-12. The polyolefin elastomers may comprise at least 50 wt.%, at least 60 wt.%, at least 70 wt.%, at least 80 wt.%, at least 90 wt.%, at least 95 wt.%, at least 99 wt.%, or even 100 wt.% of simple olefins.

As used herein, the term "MAH" refers to maleic anhydride.

As used herein, the term "ASTM" refers to the standards organization ASTM International, formerly known as American Society for Testing and Materials.

As used herein, "min." and "mins." mean minutes; "hr." and "hrs." mean hours; "sec." means seconds; "mol." means moles, "mol. %" means mole percent, "cm" means centimeters, "cm⁻¹" means 1/centimeters, "mm" means millimeters, "kV" means kilovolts, "mA" means milliamps, " °C" means degrees Celsius, "rad/s" means radians per second, "MPA" means mega pascals, "g" means grams, "cc" means cubic centimeters.

### Embodiments

Embodiments of the present disclosure are directed to reversibly crosslinked polymer foams. These foams are believed to provide superior mechanical performance and processability, relative to traditional foams. Additionally, these foams are able to be recycled through hot pressing, compression molding, and physically blowing the foam again, with no chemical steps required.

The foams of the present disclosure comprise the crosslinked reaction product of an MAH grafted olefin block copolymer ("MAH-g-OBC") with a secondary alcohol. The foams have a density of less than or equal to 0.2 g/cc.

The MAH-g-OBC may comprise an olefin block copolymer ("OBC") with maleic anhydride grafted onto it. The MAH may be covalently bonded to the olefin block copolymers.

The MAH-g-OBC may have a grafting level of from 0.1 to 2.0 wt.% maleic anhydride. For example, the MAH-g-OBC may be from 0.1 to 2.0 wt.%, 0.5 to 2.0 wt.%, from 1.0 to 2.0 wt.%, from 1.5 to 2.0 wt.%, from 0.1 to 1.5 wt.%, from 0.1 to 1.0 wt.%, from 0.1 to 0.5 wt.%, from 0.2 to 1.8 wt.%, from 0.4 to 1.6 wt.%, from 0.6 to 1.4 wt.%, from 0.8 to 1.2 wt.%, from 0.3 to 0.7 wt.%, from 0.4 to 0.5 wt.%, or any subset thereof, of MAH.

In various embodiments, the OBC is, for example, an ethylene/alpha-olefin block copolymer. Commercial examples of ethylene/alpha-olefin block copolymer include resins available under the trade name INFUSE^{™}, available from The Dow Chemical Company (Midland, MI).

In various embodiments, the ethylene/alpha-olefin block copolymer may comprise ethylene and one or more copolymerizable alpha-olefin monomers in polymerized form, characterized by multiple blocks or segments of two or more polymerized monomer units differing in chemical or physical properties. In one or more embodiments, the OBC can be represented by the formula (AB)n where n is at least 1, preferably an integer greater than 1, such as 2, 3, 4, 5, 10, 15, 20, 30, 40, 50, 60, 70, 80, 90, 100, or higher, "A" represents a hard block, and "B" represents a soft block. In embodiments, As and Bs are linked in a substantially linear fashion, as opposed to a substantially branched or substantially star-shaped fashion. In one or more embodiments, A blocks and B blocks are randomly distributed along the polymer chain and do not have a structure as follows: AAA-AA-BBB-BB. In some embodiments, the block copolymers do not have a third type of block, which comprises different comonomers. In embodiments, each of block A and block B has monomers or comonomers substantially randomly distributed within the block, such that neither block A nor block B comprises two or more sub-segments of distinct composition, such as a tip segment, that has a substantially different composition than the rest of the block.

The OBC can include various amounts of "hard" and "soft" blocks. "Hard" blocks refer to blocks of polymerized units in which ethylene is present in an amount greater than about 95 wt.%, and preferably greater than about 98 wt.%, based on the weight of the polymer. In other words, the comonomer content, i.e., the content of monomers other than ethylene, in the hard blocks is less than about 5 wt.%, and preferably less than about 2 wt.%, based on the weight of the polymer. In one or more embodiments, the hard blocks comprise all or substantially all ethylene. "Soft" blocks, on the other hand, refer to blocks of polymerized units in which the comonomer content, i.e., the content of monomers other than ethylene, is greater than about 5 wt.%. For example, the comonomer content may be greater than about 5 wt.%, greater than about 8 wt.%, greater than about 10 wt.%, or greater than about 15 wt.%, based on the weight of the polymer. In various embodiments, the comonomer content in the soft blocks can be greater than about 20 wt.%, greater than about 25 wt.%, greater than about 30 wt.%, greater than about 35 wt.%, greater than about 40 wt.%, greater than about 45 wt.%, greater than about 50 wt.%, or greater than about 60 wt.%, based on the weight of the polymer.

In various embodiments, the soft blocks are present in the OBC at amounts from about 1 wt.% to about 99 wt.% of a total weight of the polyolefin elastomer. For example, the soft blocks can be present from about 5 wt.% to about 95 wt.%, from about 10 wt.% to about 90 wt.%, from about 15 wt.% to about 85 wt.%, from about 20 wt.% to about 80 wt.%, from about 25 wt.% to about 75 wt.%, from about 30 wt.% to about 70 wt.%, from about 35 wt.% to about 65 wt.%, from about 40 wt.% to about 60 wt.%, or from about 45 wt.% to about 55 wt.% of the total weight of the OBC. Conversely, the hard blocks can be present in similar ranges. The soft block and hard block weight percentages can be calculated based on data obtained from DSC or NMR. Such methods and calculations are disclosed in U.S. Patent Application Publication No. 2006/0199930.

Examples of alpha-olefin comonomers that may be used to form the ethylene/alpha-olefin block copolymer include, by way of example and not limitation, propylene, isobutylene, 1-butene, 1-pentene, 1-hexene, 1-heptene, 1-octene, 1-nonene, 1-decene, and 1-dodecene, 1-tetradecene, 1-hexadecene, 1-octadecent, 1-eicosene, 3-methyl-1-butene, 3-methyl-1-penten, 4-methyl-1-penten, 4,6-dimethyle-1-heptene, 4-vinylcyclohexene, vinylcyclohexane, norbornadiene, ethylidene norbornene, cyclopentene, cyclohexene, dicyclopentadiene, cyclooctene, C₄-C₄₀ dienes, other C₄-C₄₀ alpha-olefins, and the like. In a further embodiment, the alpha-olefin comonomers may comprise C₄-C₈ comonomers. Comonomer content may be measured using any suitable technique, such as techniques based on nuclear magnetic resonance ("NMR") spectroscopy, and, for example, by ¹³C NMR analysis as described in U.S. Patent No. 7,498,282.

In various embodiments, the OBC has a melt index (I₂) of from about 0.5 to about 30.0 g/10 min, as determined in accordance with ASTM D1238 (190 °C; 2.16 kg). For example, the ethylene/alpha-olefin block copolymer may have a melt index (I₂) of from 0.5 to 30.0 g/10 min, from 0.5 to 12 g/10 min, from 0.5 g/10 min to 5.0 g/10 min, or from 3.0 g/10 min to 7.0 g/10 min.

In various embodiments, the OBC has a density of 0.850 g/cc to 0.890 g/cc. All individual values and subranges from 0.850 g/cc to 0.890 g/cc are included herein and disclosed herein; for example, the density of the ethylene/alpha-olefin block copolymer can be from a lower limit of 0.850 g/cc, 0.855 g/cc, 0.860 g/cc, 0.865 g/cc, or 0.870 g/cc to an upper limit of 0.890 g/cc, 0.885 g/cc, 0.880 g/cc, or 0.875 g/cc. In embodiments, the ethylene/alpha-olefin block copolymer has a density of from 0.860 g/cc to 0.890 g/cc.

The OBC has a melt temperature (Tₘ) (DSC) of from 115 °C to 125 °C. All individual values and subranges from 115 °C to 125 °C are included herein and disclosed herein; for example, the melting point of the ethylene/alpha-olefin block copolymer can be from a lower limit of 115 °C, 116 °C, 117 °C, 118 °C, 119 °C, or 120 °C to an upper limit of 125 °C, 124 °C, 123 °C, 122 °C, or 121 °C.

In some embodiments, the OBC has a molecular weight distribution (MWD) of 3.5 or less. Molecular weight distribution (MWD) is defined as weight average molecular weight (Mw) divided by number average molecular weight (Mn). For example, the OBC of some embodiments has a MWD of from 2 to 3. Techniques for determining molecular weight (Mn and Mw) and MWD may be found in U.S. Patent No. 4,540,753.

The OBC can be formed utilizing known polymerization processes, such as those described in PCT Application No. PCT/US2005/008915, PCT Application No. PCT/US2005/008916, and PCT Application No. PCT/US2005/008917.

The foam comprises the crosslinked reaction product of MAH-g-OBC and a secondary alcohol. As used herein, a "secondary alcohol" is a compound, which has a hydroxide group bonded to a carbon atom, where the carbon atom has two other carbon atoms and a hydrogen attached to it. The secondary alcohol may consist of carbon, oxygen, and hydrogen.

The secondary alcohol may be defined by formula 1.

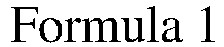

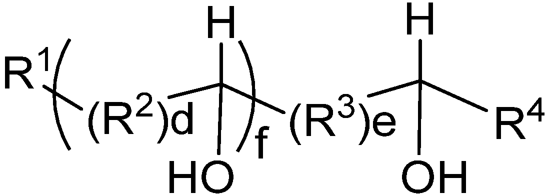

With reference to Formula 1, R1 and R4 may each independently represent a chain or cyclic alkyl group having 1 to 20 carbon atoms, an alkoxy group, or an aromatic group. For example, R1 may represent a chain or cyclic alkyl group having from 1 to 20, 5 to 20, 10 to 20, 15 to 20, 1 to 15, 1 to 10, 1 to 5, 5 to 15, or any subset thereof of carbon atoms; an alkoxy group; or an aromatic group. R4 may represent a chain or cyclic alkyl group having from 1 to 20, 5 to 20, 10 to 20, 15 to 20, 1 to 15, 1 to 10, 1 to 5, 5 to 15, or any subset thereof of carbon atoms; an alkoxy group; or an aromatic group.

Still referring to Formula 1, R2 and R3 may each independently represents a linear or cyclic alkylene group having 1 to 20 carbon atoms, a carbonyl group, an aromatic group, or an oxy group. For example, R2 may represent a linear or cyclic alkylene group having from 1 to 20, 5 to 20, 10 to 20, 15 to 20, 1 to 15, 1 to 10, 1 to 5, 5 to 15 carbon atoms; a carbonyl group; an aromatic group; or an oxy group. R3 may represent a linear or cyclic alkylene group having from 1 to 20, 5 to 20, 10 to 20, 15 to 20, 1 to 15, 1 to 10, 1 to 5, 5 to 15 carbon atoms; a carbonyl group; an aromatic group; or an oxy group.

Still referring to Formula 1, d may be an integer of 0 or more. For example, d may be 0, 1, 2, 3, 4, 5, or more than 5. e may be an integer of 0 or more. For example, e may be 0, 1, 2, 3, 4, 5, or more than 5. f may be an integer of 1 or more. For example, f may be 1, 2, 3, 4, 5, or more than 5.

According to some embodiments, the secondary alcohol may comprises 2,5-hexanediol. For example, the secondary alcohol may comprise at least 50 wt.%, at least 75 wt.%, at least 90 wt.%, at least 95 wt.%, at least 99 wt.%, or even at least 99.9 wt.% of 2,5-hexanediol. 2,5-hexanediol may be represented by Formula 2.

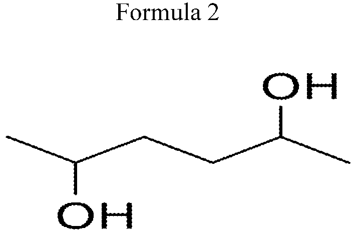

The foam may comprise from 98 to 99.999 wt.% MAH-g-OBC. For example, the foam may comprise from 98 to 99.99 wt.%, from 98 to 99.9 wt.%, from 98 to 99 wt.%, from 98.5 to 99.999 wt.%, from 98.5 to 99.99 wt.%, from 98.5 to 99.9 wt.%, from 98.5 to 99.0 wt.%, from 99 to 99.999 wt.%, from 99 to 99.99 wt.%, from 99 to 99.9 wt.%, from 99.9 to 99.999 wt.%, or any subset thereof, MAH-g-OBC.

The foam may comprise 0.001 to 2.0 wt.% secondary alcohol. For example, the foam may comprise from 0.001 to 1.5 wt.%, from 0.001 to 1.0 wt.%, from 0.001 to 0.5 wt.%, from 0.001 to 0.25 wt.%, from 0.001 to 0.2 wt.%, from 0.001 to 0.1 wt.%, from 0.001 to 0.01 wt.%, from 0.01 to 2 wt.%, from 0.01 to 1.5 wt.%, from 0.01 to 1.0 wt.%, from 0.01 to 0.5 wt.%, from 0.01 to 0.25 wt.%, from 0.01 to 0.2 wt.%, from 0.01 to 0.1 wt.%, from 0.1 to 2.0 wt.%, from 0.1 to 1.5 wt.%, from 0.1 to 1.0 wt.%, from 0.1 to 0.5 wt.%, from 0.1 to 0.25 wt.%, from 0.1 to 0.2 wt.%, from 0.5 to 2.0 wt.%, from 0.5 to 1.5 wt.%, from 0.5 to 1.0 wt.%, from 0.5 to 0.5 wt.%, from 1.0 to 2.0 wt.%, from 1 to 1.5 wt.%, or any subset thereof of secondary alcohol.

The foam may comprise from 98 to 99.999 wt.% MAH-g-OBC and from 0.001 to 2 wt.% secondary alcohol. Therefore, the foam may be at least 98.001 wt.% of the combined weight of MAH-g-OBC and secondary alcohol. For example, the foam may be at least 98.01 wt.%, at least 98.1 wt.%, at least 98.5 wt.%, at least 99.0 wt.%, at least 99.5 wt.%, at least 99.9 wt.%, at least 99.99 wt.%, at least 99.999 wt.%, or even 100 wt.% of the combined weight of MAH-g-OBC and secondary alcohol.

The thermoreversible polymer composition and the reaction making said thermoreversible polymer composition included in the foam may be represented by Formula 3.

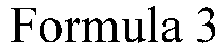

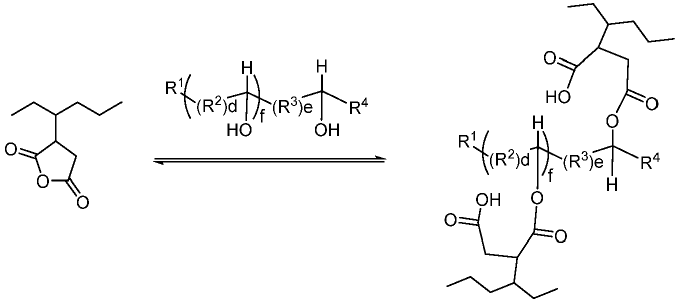

Referring now to Formula 3, the thermoreversible polymer composition may be represented by the structure on the right-hand side while the structure on the left-hand side is the MAH-g-OBC and the structure above the line is the secondary alcohol. As in Formula 1, R1 and R4 each independently, represent a chain or cyclic alkyl group having from 1 to 20 carbon atoms, an alkoxy group, or an aromatic group. R2 and R3 each independently represents a linear or cyclic alkylene group having 1 to 20 carbon atoms, a carbonyl group, an aromatic group, or an oxy group. d and e are integers of 0 or more. f is an integer of 1 or more.

The foam may comprise a blend of the MAH-g-OBC and one or more of polyolefin elastomers ("POE"), ethylene vinyl acetate copolymer ("EVA"), and low density polyethylene ("LDPE"). The one or more of POE, EVA, and LDPE may be chemically bonded to the MAH-g-OBC or blended with the MAH-g-OBC. According to some embodiments, the one or more of POE, EVA, and LDPE may be mixed with the MAH-g-OBC before the crosslinking reaction with the secondary alcohol. According to alternate embodiments, the one or more of POE, EVA, and LDPE may be mixed with the MAH-g-OBC after the crosslinking reaction with the secondary alcohol.

According to embodiments where the foam further comprises one or more of POE, EVA, and LDPE, the foam may comprise at least 0.01 wt.%, at least 0.1 wt.%, at least 0.5 wt.%, at least 1.0 wt.%, at least 5.0 wt.%, at least 10 wt.%, at least 20 wt.%, or even at least 30 wt.% of the POE, EVA, and LDPE.

According to embodiments where the foam further comprises one or more of POE, EVA, and LDPE, the foam may comprise at least 70 wt.% of the combined weight of MAH-g-OBC and secondary alcohol. For example, the foam may comprise at least 80 wt.%, at least 90 wt.%, at least 95 wt.%, at least 99 wt.% or even at least 99.9 wt.% of the combined weight of MAH-g-OBC and secondary alcohol.

According to embodiments where the foam further comprises one or more of POE, EVA, and LDPE, the foam may be at least 99 wt.% of the combined weight of POE, EVA, LDPE, MAH-g-OBC, and secondary alcohol. For example, the foam may be at least 99.5 wt.%, at least 99.9 wt.%, at least 99.99 wt.%, or even at least 99.999 wt.% of the combined weight of POE, EVA, LDPE, MAH-g-OBC, and secondary alcohol.

The foam may comprise a thermoreversible crosslinkable polymer composition, such as MAH-g-OBC and a secondary alcohol. As used herein, a thermoreversible crosslinkable polymer composition is a polymer where crosslinks between the units are present at low temperatures, those crosslinks breakdown at elevated temperature and re-form again when the temperature is decreased. For example, at least 50 % of the crosslinks between the polymer units may dissolve when the temperature is raised from 25 °C to 200°C. At least 90 % of the crosslinks that broke down at 200°C may re-form when the temperature is decreased to 25 °C.

The foam may have a rebound % of greater than or equal to 60 %. For example, the foam may have a rebound % of greater than or equal to 62 %, 64 %, 66 %, 68 %, 70 %, or 71 %. The rebound % or rebound resilience is a measure of the relationship between the storage and loss modulus in polymers. The rebound % may be measured according to ASTM D7121.

The foam has a density of less than or equal to 0.2 g/cc. For example, the foam may have a density of less than 0.18 g/cc, less than 0.16 g/cc, 0.14 g/cc, 0.12 g/cc, 0.10 g/cc, 0.08 g/cc, or even 0.06 g/cc. The density of the foam may be measured according to ASTM D 792 Method A.

The foam may be formed by physically foaming a thermoreversible crosslinkable composition to form the foam. As used herein, a "physically foaming" is a process by which a polymeric composition may be converted to a foam without the use of a chemical reaction. The thermoreversible crosslinkable composition may comprise at least 50 wt.%, at least 75 wt.%, at least 90 wt.%, at least 95 wt.%, at least 99 wt.%, or even at least 99.9 wt.% of the MAH-g-OBC, and the secondary alcohol.

The thermoreversible crosslinkable composition may be virgin material or it may be recycled material. As used herein, "virgin material" refers to a polymeric composition which has not yet been foamed even once. As used herein, "recycled material" refers to a polymeric composition which has been foamed at least once prior.

The foam may be recycled. Recycling the foam may comprise hot pressing the foam to remove the air and form solid film pieces, compression molding the solid film pieces into one or more plates, and physically foaming the plates to produce a recycled foam.

The physical foaming may use a physical blowing agent. The physical blowing agent may comprise CO₂ or N₂. As used herein, a "physical blowing agent" may be a substance which is capable of producing a cellular structure in a material. The physical blowing agent may be incorporated into the polymer by diffusion or mechanical mixing.

The polymer may be foamed by placing it in a hyperbaric chamber with a physical blowing agent pressure of at least 1 MPA, at least 2 MPA, at least 4 MPA, at least 6 MPA, at least 8 MPA, at least 10 MPA, or at least 12 MPA. The hyperbaric chamber may be heated to from 60 °C to 180 °C, from 80 °C to 160 °C, from 100 °C to 140 °C, from 110 °C to 130 °C, or any subset thereof, while the chamber is at the elevated blowing agent pressure.

The recycled foam may comprise a blend of recycled foam material and virgin foam material. For example, the recycled foam may be at least 10 wt.%, at least 20 wt.%, at least 30 wt.%, at least 40 wt.%, at least 50 wt.%, at least 60 wt.%, at least 70 wt.%, at least 80 wt.%, or at least 90 wt.% of the recycled foam material. Additionally, the recycled foam may be at least 10 wt.%, at least 20 wt.%, at least 30 wt.%, at least 40 wt.%, at least 50 wt.%, at least 60 wt.%, at least 70 wt.%, at least 80 wt.%, or at least 90 wt.% of the virgin foam material.

### TEST METHODS

### Density

The density of the foam (two sides skin on) was measured according to ASTM D 792 Method A by weighing the foam in air and water.

### Rebound

The rebound of the foam (skin on) was measured according to ASTM D7121. An impact head was bounced off the foam repeatedly. The maximum rebound heights obtained for the 4th, 5th, and 6th bouncing of the impact head after the first strike were noted and their average was taken as the rebound of the specimen. Three specimens were tested for each foam sample and their average was reported as the rebound of the foam. As used herein, the rebound test may also be referred to as the "resilience" or "rebound resilience."

### Compression Set ("C-Set")

The C-set of the foam (one side skin on) was measured according to ASTM D395 Method B. Each sample was a foam cylinder with diameter 2.54 mm and thickness 10 mm. Each sample was compressed to 50% of its original size and held there for 6 hours at 50 °C. The compression was removed and each sample was allowed to recover for 30 min. at room temperature to generate the sample labeled 30 min. Additional samples were allowed to rest for 24 hr. to generate the "24 hr." samples. The final specimen thickness was measured, and the compression set was calculated using the following equation. Compression set (%) = ((Tₒ - T_{f}))/((Tₒ - Tₛ)) × 100. To is the original sample thickness, T_{f} is the final sample thickness, and Tₛ is the spacer thickness.

### Tear Strength

The tear strength of the foam (one side skin on) was tested according to ASTM D3574. A 25 mm (width) × 100 mm (length) × 10 mm (thickness) foam strip was cut. The foam strip was pulled apart at the rate of 50 mm/min. The highest load recorded divided by the sample width is the split tear strength.

### Split Tear Strength

The split tear strength of the foam (one side skin on) was tested according to ASTM D3574. A 25 mm (width) × 100 mm (length) × 10 mm (thickness) foam strip was cut, and notched with a razor to a depth of 15 mm. The two foam strips (5 mm thickness each) created by the razor notch were pulled apart at the rate of 50 mm/min. The highest load recorded divided by the sample width is the split tear strength.

### Shrinkage

A foam sample was marked and measured for length and width. It was put into an oven at 70 °C for 40 min. and then taken from the oven and allowed to cool overnight. The marked length and width were measured again, and the percentage shrinkage was calculated by the following equation. Heat Shrinkage = (1 - (L_{f}+W_{f})/(Lₒ+Wₒ)) × 100. Lₒ is the original length, Wₒ is the original width, and L_{f} is the final length, W_{f} is the final width.

### Fourier-Transform Infrared Spectroscopy ("FTIR") characterization

Perkin Elmer Spectrum Spotlight 200 with Smart DuraSamplIR Diamond Attenuated Total Reflectance ("ATR") was used for ATR-FTIR analysis. The sample being analyzed was placed on a diamond/ZnSe crystal. Appropriate pressure was applied to acquire optimum contact, then the ATR-FTIR spectrum was collected between 4000 cm⁻¹ and 650 cm⁻¹. Each sample was scanned 8 times.

### Scanning Electron Microscopy (SEM)

A small piece of the sample was cut, mounted on a sample holder and coated with Ir using an Emitech K575X coater. The current was set to 45 mA and the coating time was set to 15 sec. The coated samples were immediately imaged in a Nova 630 NanoSEM operating in immersion mode, with an accelerating voltage of 2 kV, a spot size of 2.5, and a working distance of 4 mm, using a through the lens detector ("TLD").

### Thermal Sensitivity Evaluation via Shear Rheology

A parallel-plate rotational rheometer was utilized to run oscillatory frequency sweep tests. The characterization was performed on a stress-controlled rheometer. Aluminum parallel-plates (25-mm diameter) were used for a thin disk (25-mm diameter, 2 mm thick) of the polymers. The temperature was set to 130 °C, 150 °C, and 180 °C respectively. The angular frequency was set as 0.1 to 100 rad/s with strain of 2%.

### Tensile Modulus

A dynamic mechanical analyzer was utilized to run oscillation temperature ramp tests. The characterization was performed on a RSA-G2, TA Instruments. A tension fixture was used to ensure the rectangular shape of the samples (width: ~5 mm, thickness: ~0.5 mm). The test temperature was set as 80 °C to 200 °C with a ramp rate of 3 °C/min. The angular frequency was set to 6.28 rad/s and auto strain mode was enabled during the whole temperature range.

### Hardness

The hardness was measured according to ASTM D 2240.

### EXAMPLES

Sample foams were prepared by combining various MAH grafted polymers with a crosslinking agent. The polymers are specified in Table 1. 0.9 wt.% Luperox 101 (2,5-Bis(tert-butylperoxy)-2,5-dimethylhexane (peroxide) was used as the crosslinking agent in comparative example (CE1). 0.1 wt.% 2,5-hexanediol was used as the secondary alcohol crosslinking agent in the inventive examples (IE1-IE2) and in the other comparative examples (CE2-CE5).

**Table 1-Sample Resins wt.% WT.%**

| Commercial Resin | Composition | Density (g/cc) | Melt Index (I2) (g/10 mins) | MAH Grafting Level | Examples Used |
|---|---|---|---|---|---|
| INFUSE^{™} 9530 | MAH-g-OBC | 0.887 | 5 | 0.6 wt.% | IE1, CE1 |
| INFUSE^{™} 9100 | MAH-g-OBC | 0.877 | 1 | 0.6 wt.% | IE2 |
| AMPLIFY^{™} TY 1057H | MAH-g-LLDPE | 0.912 | 3 | >0.5 wt% | CE3 |
| AMPLIFY^{™} GR216 | MAH-g-POE | 0.875 | 1.3 | 0.5-1.0 wt% | CE5 |
| FUSABOND^{®} C250 | MAH-g-EVA | 0.962 | 1.4 | >0.5 wt% | CE4 |
| B1A | MAH-g-PP | | | | CE2 |

### MAH-g-OBC Resin Preparation

The MAH grafted olefin polymers of IE1-IE2 and CE1-CE5 were prepared in a reactive extrusion process. Specifically, polymer pellets were fed into the twin-screw extruder under a nitrogen atmosphere. Downstream of the polymer injection point, a mixture of MAH, peroxide, 2-butanone, and methyl ethyl ketone ("MEK") was added to the extruder. Further downstream, the MEK, unreacted MAH, and peroxide byproducts were removed via a vacuum line-trap system. The resulting polymer melt was then extruded through a strand die, quenched in a water bath, and pelletized using a Conair strand pelletizer.

### Pellet Preparation

To prepare the inventive examples, 400 g of the MAH grafted polymer resin was placed in a bottle of 0.1 wt.% 2,5-hexanediol and agitated at 60 °C overnight.

To prepare the comparative examples, 400 g of the MAH grafted polymer resin was placed in a bottle of 0.9 wt.% Luperox 101 (2,5-Bis(tert-butylperoxy)-2,5-dimethylhexane and agitated at 60 °C overnight.

The alcohol soaked resin pellets were then compression molded to form plates. The compression molding occurred at a pressure of 10 MPA - 12 MPA to a size of 6 mm x 70 mm x 150 mm at 150 °C for 20 min. and finished at 190 °C for 30 min.

### Physical Foaming

The crosslinked and compression molded plates were then physically foamed by placing the plates in a hyperbaric chamber. The samples were held in the chamber at 121 °C and 12 MPA of CO₂ for 180 min.

The samples were tested for density, rebound, C-set, shrinkage, split tear, tensile modulus at maximum load, tear maximum load, and Asker hardness. The results are given in Table 2. Samples labelled N/A were not tested. Sample CE2 failed to form a foam and thus was untested.

**Table 2- Physical Testing**

| Sample Name | IE1 | CE1 | CE2 | CE3 | CE4 | CE5 | IE2 | RE3 |
|---|---|---|---|---|---|---|---|---|
| Density (g/cm³) | 0.075 | 0.05 | N/A | 0.087 | 0.114 | 0.146 | 0.064 | 0.05 |
| Rebound (%) | 62 | 71 | N/A | 46 | 56 | 72 | 71 | 60 |
| C-set 30 min. (%) | 81 | 85 | N/A | 68.4 | 89 | 67.3 | 82.2 | N/A |
| C-set 24 hr. (%) | N/A | N/A | N/A | 64.9 | 90.9 | 73.3 | 66.8 | N/A |
| Shrinkage (%) | 4.2 | 7.6 | N/A | 8 | 54 | 42 | 11 | N/A |
| Split tear (N/mm) | 1.61 | 0.52 | N/A | 3.19 | 0.73 | 2.13 | 1.13 | N/A |
| Tensile Modulus Tensile stress at Maximum Load (MPa) | N/A | N/A | N/A | 2.96 | 1.27 | 2.25 | 1.99 | N/A |
| Tear Maximum Load/Thickness (N/mm) | N/A | N/A | N/A | 10.43 | 3.19 | 10.9 | 5.15 | N/A |
| Hardness (Asker C) | 16.6 | N/A | N/A | 41.2 | 25.8 | 30.8 | 16.8 | 17 |

As is shown in Table 2, the inventive examples IE1-IE2 have improved shrinkage and split tear performance, relative to the controls.

### Simulated Recycling

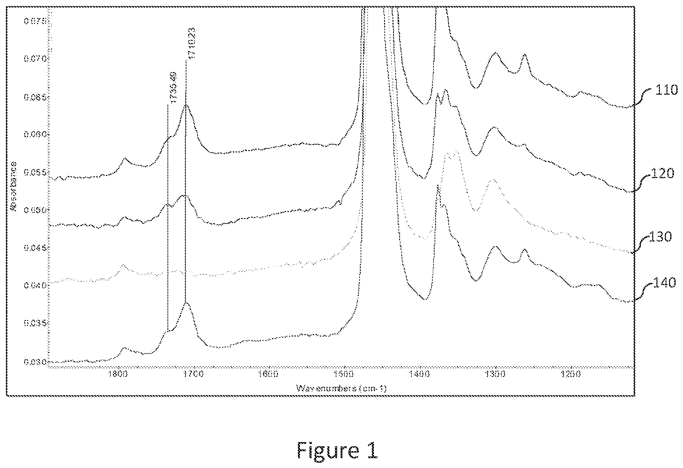

FTIR: Sample IE 1 was placed in an FTIR so the ester peak heights can be observed at multiple temperatures. As is shown in Fig. 1, the sample started at room temperature (110), the sample was then raised to 110 °C (120), the sample was then raised to 150 °C (130), finally the sample was returned to room temperature (140). As can be seen in the figure, the ester peaks at 1735 cm⁻¹ and the 1710 cm⁻¹ decrease as the temperature is progressively increased. The peaks then return as the sample is cooled. This indicates the initial presence of the ester, the destruction of the ester as temperature is increased, and the formation of new ester as the sample cools again.

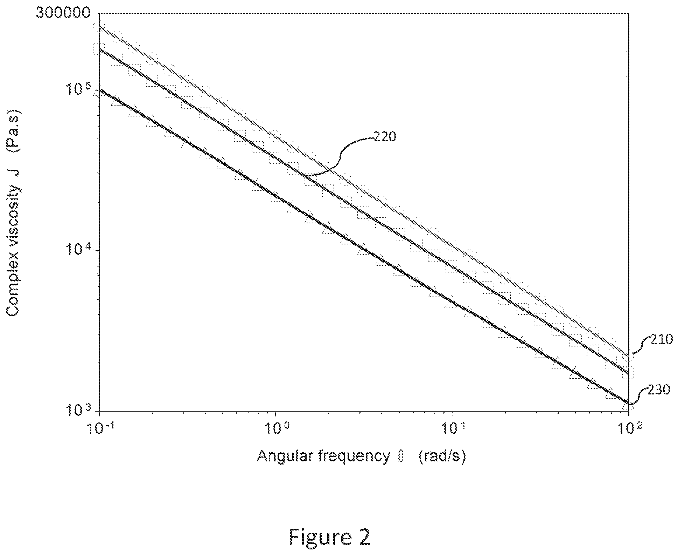

Complex Viscosity: Plaques of IE1 were prepared by compression molding and run through an oscillation frequency sweep at 130 °C (210), 150 °C (220), and 180 °C (230). As is shown in Fig. 2, The sample has its lowest complex viscosity at 180 °C and its highest at 130 °C. This indicates that the sample is highly thermoplastic.

### Actual Recycling

An unused sample IE1 was shredded and hot pressed to remove air and obtain a solid film sample. The solid film samples were compression molded to obtain a 6 mm thick plate and then subjected to the same physical foaming process as the new samples. This sample is referred to as RE3 in Table 2.

Table 3 compares the melt index for mixtures of IE1 and RE3.

**Table 3**

| | 80 % IE1 + 20 % RE3 | 60 % IE1 + 40 % RE3 | 40 % IE1 + 60 % RE3 | 20 % IE1 + 80 % RE3 | 0 % IE1 + 100 % RE3 |
|---|---|---|---|---|---|
| MI @ 190 °C + 2.16 kg | 1.9 g/10 min. | 0.2 g/10 min. | 0.03 g/10 min. | 0.007 g/10 min. | N/A |
| MI @ 230 °C + 2.16 kg | 5.1 g/10 min. | 3.1 g/10 min. | 1.6 g/10 min. | 1.2 g/10 min. | N/A |
| MI @ 250 °C + 2.16 kg | N/A | 6.8 g/10 mm. | 5.3 g/10 min. | | N/A |

After re-foaming, the foam density was roughly the same as when new. The new foam had a density of 0.075 g/cm³, while the recycled foam had a density of 0.078 g/cm³.

. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a cited document, the meaning or definition assigned to that term in this document shall govern.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A foam comprising the crosslinked reaction product of:
maleic anhydride grafted olefin block copolymer (MAH-g-OBC); and
secondary alcohol,
wherein the foam has a density less than or equal to 0.2 g/cc.

2. The foam of claim 1, wherein the foam comprises a blend of the MAH-g-OBC and one or more of polyolefin elastomers, ethylene vinyl acetate copolymer, and low density polyethylene.

3. The foam of any preceding claim, wherein the secondary alcohol is defined by the following formula: 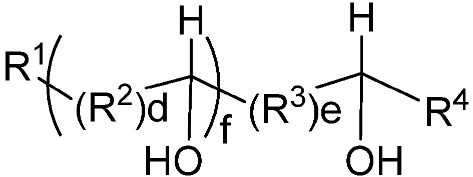 wherein, R1 and R4 each independently represent a chain or cyclic alkyl group having 1 to 20 carbon atoms, an alkoxy group, or an aromatic group; R2 and R3 each independently represents a linear or cyclic alkylene group having 1 to 20 carbon atoms, a carbonyl group, an aromatic group, or an oxy group; d and e are integers of 0 or more; and f is an integer of 1 or more.

4. The foam of any preceding claim, wherein the secondary alcohol comprises 2,5-hexanediol.

5. The foam of any preceding claim, wherein the foam has a rebound % of greater than or equal to 60.

6. The foam of any preceding claim, wherein the foam density is less than or equal to 0.1 *g*/*cc.*

7. The foam of any preceding claim, wherein the MAH-g-OBC has a grafting level from 0.1 to 2.0 wt.% maleic anhydride.

8. The foam of any preceding claim, wherein the OBC is an ethylene/alpha-olefin block copolymer.

9. The foam of claim 8, wherein the alpha-olefin is octene.

10. The foam of claims 8 or 9, wherein the ethylene/alpha-olefin block copolymer comprises greater than 50 mol. % ethylene monomer.

11. The foam of any preceding claim, wherein the foam comprises 98 to 99.999 wt.% MAH-g-OBC and 0.001 to 2 wt.% secondary alcohol.

12. A foaming process:
physically foaming a thermoreversible crosslinkable composition to form the foam of any preceding claim, wherein the thermoreversible crosslinkable composition comprises the MAH-g-OBC, and the secondary alcohol.

13. The foaming process of claim 12
hot pressing the foam to remove the air and form solid film pieces;
compression molding the solid film pieces into one or more plates;
physically foaming the plates to produce a recycled foam.

14. The foaming process of claims 12 or 13, wherein the recycled foam comprises a blend of recycled foam material and virgin foam material.

15. The foaming process of any of claims 12-14, wherein the physical foaming uses a physical blowing agent, the physical blowing agent comprising CO₂ or N₂.

## Patentansprüche

1. Schaumstoff, umfassend das vernetzte Reaktionsprodukt von:
mit Maleinsäureanhydrid gepfropftem Olefin-Blockcopolymer (MAH-g-OBC); und
sekundärem Alkohol,
wobei der Schaumstoff eine Dichte von weniger als oder gleich 0,2 g/cm³ aufweist.

2. Schaumstoff nach Anspruch 1, wobei der Schaumstoff eine Mischung aus dem MAH-g-OBC und einem oder mehreren von Polyolefin-Elastomeren, EthylenVinylacetat-Copolymer und Polyethylen niedriger Dichte umfasst.

3. Schaumstoff nach einem der vorstehenden Ansprüche, wobei der sekundäre Alkohol durch die folgende Formel definiert ist: 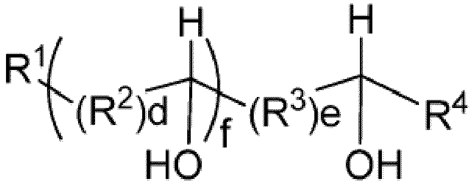 wobei R1 und R4 jeweils unabhängig eine Ketten oder eine cyclische Alkylgruppe mit 1 bis 20 Kohlenstoffatomen, eine Alkoxygruppe oder eine aromatische Gruppe darstellen; R2 und R3 jeweils unabhängig eine lineare oder cyclische Alkylengruppe mit 1 bis 20 Kohlenstoffatomen, eine Carbonylgruppe, eine aromatische Gruppe oder eine Oxygruppe darstellen; d und e ganze Zahlen von 0 oder mehr sind; und f eine ganze Zahl von 1 oder mehr ist.

4. Schaumstoff nach einem der vorstehenden Ansprüche, wobei der sekundäre Alkohol 2,5-Hexandiol umfasst.

5. Schaumstoff nach einem der vorstehenden Ansprüche, wobei der Schaumstoff einen Rebound-Prozentsatz von mehr als oder gleich 60 aufweist.

6. Schaumstoff nach einem der vorstehenden Ansprüche, wobei die Schaumstoffdichte weniger als oder gleich 0,1 g/cm³ beträgt.

7. Schaumstoff nach einem der vorstehenden Ansprüche, wobei das MAH-g-OBC einen Pfropfgrad von 0,1 bis 2,0 Gew.-% Maleinsäureanhydrid aufweist.

8. Schaumstoff nach einem der vorstehenden Ansprüche, wobei das OBC ein Ethylen/Alpha-Olefin-Blockcopolymer ist.

9. Schaumstoff nach Anspruch 8, wobei das Alpha-Olefin Octen ist.

10. Schaumstoff nach Ansprüchen 8 oder 9, wobei das Ethylen/Alpha-Olefin-Blockcopolymer zu mehr als 50 Mol-% Ethylenmonomer umfasst.

11. Schaumstoff nach einem der vorstehenden Ansprüche, wobei der Schaumstoff zu 98 bis 99,999 Gew.-% MAH-g-OBC und zu 0,001 bis 2 Gew.-% sekundären Alkohol umfasst.

12. Schäumungsverfahren:
physikalisches Schäumen einer thermoreversibel vernetzbaren Zusammensetzung, um den Schaumstoff nach einem der vorstehenden Ansprüche zu bilden, wobei die thermoreversibel vernetzbare Zusammensetzung das MAH-g-OBC und den sekundären Alkohol umfasst.

13. Schäumungsverfahren nach Anspruch 12
Heißpressen des Schaumstoffs, um die Luft zu entfernen und feste Filmstücke zu bilden;
Formpressen der festen Filmstücke zu einer oder mehreren Platten;
physikalisches Schäumen der Platten, um einen recycelten Schaumstoff zu produzieren.

14. Schäumungsverfahren nach Ansprüchen 12 oder 13, wobei der recycelte Schaumstoff eine Mischung aus recyceltem Schaumstoffmaterial und frischem Schaumstoffmaterial umfasst.

15. Schäumungsverfahren nach einem der Ansprüche 12 bis 14, wobei das physikalischen Schäumen ein physikalisches Treibmittel verwendet, wobei das physikalische Treibmittel CO₂ oder N₂ umfasst.

## Revendications

1. Mousse comprenant le produit de réaction réticulé de :
copolymère séquencé d'oléfine greffé par de l'anhydride maléique (MAH-g-OBC) ; et
l'alcool secondaire,
dans laquelle la mousse a une densité inférieure ou égale à 0,2 g/cc.

2. Mousse selon la revendication 1, dans laquelle la mousse comprend un mélange du MAH-g-OBC et d'un ou de plusieurs élastomères de polyoléfine, copolymère éthylène-acétate de vinyle et polyéthylène basse densité.

3. Mousse selon l'une quelconque revendication précédente, dans laquelle l'alcool secondaire est défini par la formule suivante : 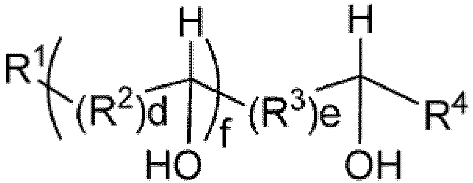 dans laquelle R1 et R4 représentent chacun indépendamment une chaîne ou un groupe alkyle cyclique ayant de 1 à 20 atomes de carbone, un groupe alcoxy ou un groupe aromatique ; R2 et R3 représentent chacun indépendamment un groupe alkylène linéaire ou cyclique ayant de 1 à 20 atomes de carbone, un groupe carbonyle, un groupe aromatique ou un groupe oxy ; d et e sont des nombres entiers de 0 ou plus ; et f est un nombre entier de 1 ou plus.

4. Mousse selon l'une quelconque revendication précédente, dans laquelle l'alcool secondaire comprend 2,5-hexanediol.

5. Mousse selon l'une quelconque revendication précédente, dans laquelle la mousse a un pourcentage de rebond supérieur ou égal à 60.

6. Mousse selon l'une quelconque revendication précédente, dans laquelle la densité de mousse est inférieure ou égale à 0,1 g/cc.

7. Mousse selon l'une quelconque revendication précédente, dans laquelle le MAH-g-OBC a un niveau de greffage compris entre 0,1 à 2,0 % en poids d'anhydride maléique.

8. Mousse selon l'une quelconque revendication précédente, dans laquelle l'OBC est un copolymère séquencé éthylène/alpha-oléfine.

9. Mousse selon la revendication 8, dans laquelle l'alpha-oléfine est de l'octène.

10. Mousse selon les revendications 8 ou 9, dans laquelle le copolymère séquencé éthylène/alpha-oléfine comprend plus de 50 % en moles de monomère éthylène.

11. Mousse selon l'une quelconque revendication précédente, dans laquelle la mousse comprend 98 à 99,999 % en poids de MAH-g-OBC et 0,001 à 2 % en poids d'alcool secondaire.

12. Procédé de moussage :
moussant physiquement une composition réticulable thermoréversible pour former la mousse selon l'une quelconque revendication précédente, dans lequel la composition réticulable thermoréversible comprend le MAH-g-OBC et l'alcool secondaire.

13. Procédé de moussage selon la revendication 12
pressant à chaud la mousse pour éliminer l'air et former des morceaux de film solides ;
moulant par compression les morceaux de film solides en une ou plusieurs plaques ;
moussant physiquement les plaques pour produire une mousse recyclée.

14. Procédé de moussage selon les revendications 12 ou 13, dans lequel la mousse recyclée comprend un mélange de mousse recyclée et de mousse vierge.

15. Procédé de moussage selon l'une quelconque des revendications 12 à 14, dans lequel le moussage physique utilise un agent de soufflage physique, l'agent de soufflage physique comprenant du CO₂ ou du N₂.
